# EUROPEAN PATENT SPECIFICATION

(11) **EP 2 920 613 B1**
(45) Date of publication and mention of the grant of the patent: **04.08.2021**
(21) Application number: 13792884.2
(22) Date of filing: 12.11.2013
(51) Int. Cl.: G01V 1/38

(54) **MARINE SEISMIC SURVEY AND METHOD USING AUTONOMOUS UNDERWATER VEHICLES AND UNDERWATER BASES**
VERFAHREN ZUR MEERESBEBENERFASSUNG MIT SELBSTSTÄNDIGEN UNTERWASSERFAHRZEUGEN UND UNTERWASSERBASEN
ÉTUDE SISMIQUE MARINE ET PROCÉDÉ UTILISANT DES VÉHICULES SOUS-MARINS AUTONOMES ET DES BASES SOUS-MARINES

(30) Priority: 14.11.2012 US 201261726230 P
(43) Date of publication of application: 23.09.2015
(73) Proprietor: Seabed Geosolutions B.V., 2264 SG Leidschendam (NL)
(72) Inventor: BRIZARD, Thierry, F-91300 Massy (FR); MAILLOTTE, David, F-91300 Massy (FR)
(74) Representative: Barker Brettell LLP
(86) International application number: PCT/EP2013/073612
(87) International publication number: WO 2014/076075

(56) References cited:
- US-A- 5 894 450
- US-A1- 2006 054 074
- SINGH H ET AL: "An intelligent dock for an autonomous ocean sampling network", OCEANS '98 CONFERENCE PROCEEDINGS NICE, FRANCE 28 SEPT.-1 OCT. 1998, NEW YORK, NY, USA,IEEE, US, vol. 3, 28 September 1998 (1998-09-28), pages 1459-1462, XP010311857, DOI: 10.1109/OCEANS.1998.726312 ISBN: 978-0-7803-5045-8

## Description

### BACKGROUND

### TECHNICAL FIELD

Embodiments of the subject matter disclosed herein generally relate to methods and systems and, more particularly, to mechanisms and techniques for using autonomous underwater vehicles (AUVs) that carry seismic sensors for performing a marine seismic survey.

### DISCUSSION OF THE BACKGROUND

Marine seismic data acquisition and processing generate a profile (image) of a geophysical structure under the seafloor. While this profile does not provide an accurate location of oil and gas reservoirs, it suggests, to those trained in the field, the presence or absence of these reservoirs. Thus, providing a high-resolution image of geophysical structures under the seafloor is an ongoing process.

Reflection seismology is a method of geophysical exploration to determine the properties of Earth's subsurface, which is especially helpful in determining the above-noted reservoirs. Marine reflection seismology is based on using a controlled source of energy that sends the energy into the earth. By measuring the time it takes for the reflections and/or refractions to come back to plural receivers, it is possible to evaluate the depth of features causing such reflections. These features may be associated with subterranean hydrocarbon deposits.

A traditional system for generating seismic waves and recording their reflections off the geological structures present in the subsurface includes a vessel that tows an array of seismic receivers provided on streamers. The streamers may be disposed horizontally, i.e., lying at a constant depth relative to the ocean surface. The streamers may have other than horizontal spatial arrangements. The vessel also tows a seismic source array configured to generate a seismic wave. The seismic wave propagates downward and penetrates the seafloor until eventually a reflecting structure (reflector) reflects the seismic wave. The reflected seismic wave propagates upward until detected by the receiver(s) on the streamer(s). Based on the data collected by the receiver(s), an image of the subsurface is generated.

However, this traditional configuration is expensive because the cost of streamers is high. Further, due to the great length of the streamers, e.g., 10 km, the streamer array is difficult to maneuver around various obstacles, e.g., an oil platform. New technologies deploy plural seismic sensors on the bottom of the ocean (ocean bottom stations) to avoid this problem. Even so, positioning the seismic sensors remains a challenge.

Such technologies use permanent receivers set on the ocean bottom, as disclosed in U.S. Patent No. 6,932,185. In this case, the seismic sensors are attached to a heavy pedestal. A station that includes the sensors is launched from a vessel and arrives, due to its gravity, at a desired position and remains on the bottom of the ocean permanently. Data recorded by sensors is transferred through a cable to a mobile station. When necessary, the mobile station may be brought to the surface for data retrieval.

Although the ocean bottom nodes better handle the various obstacles present in the water, using them is still expensive and difficult because the sensors and corresponding pedestals are left on the seafloor. Further, positioning the sensors is not straightforward.

US 589 44 50 A describes an oceanographic sampling system comprising an "array" of two or more underwater vehicles (AUVs) that may be controlled by an "array controller".

An improved approach to these problems is the use of plural (e.g., thousands) AUVs for carrying the seismic sensors and collecting the seismic data. The AUVs may be launched from a deployment vessel, guided to a final destination on the ocean bottom, instructed to record the seismic data, and then instructed to surface for retrieval. However, many challenges remain with the use of a large number of AUVs for collecting seismic data. One such challenge is the management of thousands of AUVs, maintaining the AUVs at desired positions while performing the survey, and/or retrieving all these AUVs.

Accordingly, it would be desirable to have systems and methods that provide an inexpensive and simple way to perform a seismic survey without the problems identified above.

### SUMMARY

According to the invention, there is a seismic survey system for recording seismic signals during a marine seismic survey according to claim 1.

Also according to the invention, there is a method for recording seismic data during a marine seismic survey according to claim 10.

According to an embodiment, there is a seismic survey system for recording seismic signals during a marine seismic survey. The system includes first and second underwater bases, each housing plural autonomous underwater vehicles (AUVs); the first and second underwater bases each being connected through a corresponding cable to a corresponding buoy that is floating at the water surface; the first and second underwater bases each having a controller that determines its geographical location; and at least one AUV being configured to receive pinger signals from the first and second underwater bases while traveling under water so that its trajectory toward a target position is adjusted in real-time, based on (1) the geographical locations of the first and second underwater bases and (2) the pinger signals.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of an AUV;
Figure 2 is a schematic diagram of a seismic survey system including plural clusters of AUVs according to an embodiment;
Figure 3 is a schematic view of a seismic survey system that includes plural AUVs and underwater bases according to an embodiment;
Figure 4 is a schematic diagram of another seismic survey system including plural AUVs and underwater bases according to an embodiment;
Figure 5 is a schematic diagram of an underwater base coupled to a surface vessel according to an embodiment;
Figure 6 is another view of the embodiment illustrated in Figure 5;
Figure 7 is a flow-chart of a method for deploying AUVs to desired targets according to an embodiment; and
Figure 8 is a flow-chart of a method for recording seismic data using AUVs according to an embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of an AUV having one or more seismic sensors and the AUV is housed by an underwater base. However, the embodiments to be discussed next are not limited to AUVs, but may be applied to other platforms (e.g., glider, buoy, floats, etc.) that may carry seismic sensors.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

Emerging technologies in marine seismic surveys need an inexpensive system for deploying and recovering seismic receivers at the ocean bottom. According to an exemplary embodiment, such a seismic system includes plural AUVs, each having one or more seismic sensors. The seismic sensors may be one of a hydrophone, geophone, accelerometers, electromagnetic sensors, etc. If an electromagnetic sensor is used, then a source that emits electromagnetic waves may be used instead of, or in addition to, an acoustic source.

The AUV may be a specially designed device or an inexpensive off-the-shelf device that may be quickly retrofitted or modified to include the seismic sensors and necessary communications means to be discussed later. The AUV may include, besides or in addition to a propulsion system, a buoyancy system. The buoyancy system may be a multi-phase system. A deployment vessel or an underwater base may store and launch the AUVs as necessary for the seismic survey. The AUVs find their target positions using various means as discussed later. Thus, the AUVs may be preprogrammed or partially programmed to find their target positions. If an AUV is partially programmed, the final detail for finding the target position may be received, e.g., acoustically, from the vessel when the AUV is launched from the vessel and/or from the underwater bases while the AUV is navigating underwater. In one embodiment, reference is made to a deployment vessel and/or a recovery vessel. Note that these vessels may be identical from an equipment standpoint. However, the vessels may be operated as a recovery vessel or as a deployment vessel. In other words, a recovery vessel may be instructed, after having enough AUVs on board, to become a deployment vessel, and vice versa. When the document refers to a vessel, it might be the recovery vessel, the launching vessel or both of them.

As the underwater base is releasing the AUVs, a shooting vessel may travel above the subsurface of interest for generating seismic waves. Alternatively, the source may be carried by an AUV, the underwater base, or other underwater vehicles, either autonomous or guided from a support vessel. The shooting vessel may tow one or more seismic source arrays. The seismic source array may include plural individual seismic sources that may be arranged on a horizontal line, slanted line or curved (parameterized) line underwater. The individual seismic source may be an air gun, a vibrational source or other known seismic sources. The shooting vessel or another vessel or the underwater base may then instruct selected AUVs to resurface so they can be collected by a support vessel. Alternatively, a vessel or an underwater base may instruct the AUV to return to the underwater base. In another application, a local controller of the AUV is programed to drive the AUV back to the underwater base or to a support vessel.

In one embodiment, the AUVs number is in the thousands. Fewer or more AUVs may be used in a given survey, depending on the needs of the survey. Thus, multiple underwater bases may be used and configured to house all the AUVs at the beginning of the survey and then to launch them as the survey advances. In one application, the seismic survey is performed as a combination of AUV seismic sensors and streamer seismic sensors towed by the shooting vessel. In another application, sources located on AUVs and sources towed by a vessel may be used at the same time.

If a recovery vessel is used to recover the AUVs instead of the underwater bases, the AUVs are instructed to surface and they may be programmed to go to a desired rendezvous point where they will be collected by the shooting vessel, the deployment vessel or the recovery vessel. The shooting and/or deployment or recovery vessel may be configured to send acoustic signals to the returning AUVs to guide them to the desired position. The AUVs may be configured to rise to a given altitude, execute the return path at that altitude, and then surface for recovery. In one exemplary embodiment, the AUVs are configured to communicate among themselves so they follow each other back to the recovery vessel, or they communicate among themselves to establish a queue in which to be retrieved by the shooting, recovery or deployment vessel.

Once on the vessel, the AUVs are checked for problems, their batteries may be recharged or replaced, and the stored seismic data may be transferred to the vessel for processing. The same operations may be implemented in the underwater bases. Alternatively or in addition, a compressed gas tank may be replaced or recharged for powering the AUV buoyancy system. The recovery vessel may store the AUVs on deck during maintenance or somewhere inside the vessel, e.g., inside a module, closed or open, that is fixed on the vessel or the vessel's deck. A conveyor-type mechanism may be designed to recover the AUVs on one side of the vessel when the vessel is used as a recovery vessel, and to launch the AUVs from the other side of the vessel when the vessel is used for deployment. After maintenance, the AUVs are redeployed as the seismic survey continues. Thus, in one exemplary embodiment the AUVs are continuously deployed and retrieved, either on the support vessel or in corresponding underwater bases. In still another exemplary embodiment, the AUVs are configured to not transmit the seismic data to the deployment, recovery or shooting vessel or to the underwater bases while performing the seismic survey. This may be advantageous when the electrical power available on the AUV is limited. In another exemplary embodiment, each AUV has enough electrical power (stored in the battery) to be deployed only once, record seismic data and resurface for retrieval. Thus, reducing data transmission volume between the AUV and the vessel or underwater base while the AUV is underwater conserves power and allows the AUV to be retrieved before running out of power.

According to another embodiment, instead of using a large number of AUVs that interact with a single mother vessel, it is possible to deploy clusters of AUVs, each cluster being associated with a corresponding underwater base. In this case, the situation might be that there is a mother vessel storing all the AUVs. After the AUVs are deployed in the water, they are assigned to different clusters, and each cluster is assigned to an underwater base. The underwater base may be configured to store tens of AUVs and it may be located on the ocean bottom or attached to a buoy or small boat or vessel, i.e., floating above the ocean bottom. The underwater base may be stationary and all the AUVs in its cluster are instructed to return, after recording the seismic data, to the underwater base. Each cluster may have a different number of AUVs and the AUVs' pattern (i.e., when the AUVs are reaching their target positions on the ocean bottom) can differ from cluster to cluster. An AUV may enter a bay provided by the underwater base for minor maintenance, cleaning, battery charging, data transfer, etc., as needed.

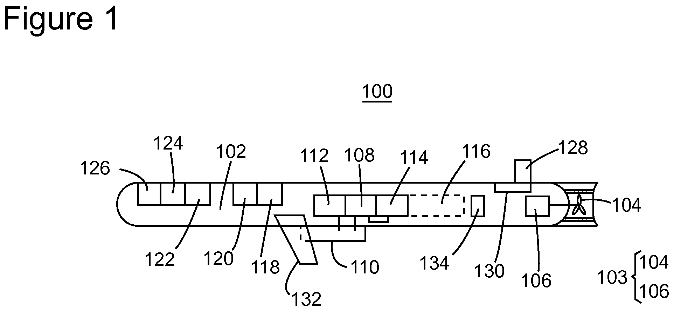

The above-noted embodiments are now discussed in more detail with regard to the figures. Figure 1 illustrates an AUV 100 having a body 102 in which a propulsion system 103 may be located. Note that in one embodiment, there is no propulsion system. If the propulsion system 103 is available, it may include one or more propellers 104 (or water jets or water pumps, etc.) and a motor 106 for activating the propeller 104. Alternatively, the propulsion system may include adjustable wings for controlling a trajectory of the AUV. The motor 106 may be controlled by a processor/controller 108. Processor/controller 108 may also be connected to a seismic sensor 110. Seismic sensor 110 may have a shape such that when the AUV lands on the seabed, the seismic sensor achieves a good coupling with the seabed sediment. The seismic sensor may include one or more of a hydrophone, geophone, accelerometer, etc. For example, if a 4C (four component) survey is desired, the seismic sensor 110 includes three accelerometers and a hydrophone, i.e., a total of four sensors. Alternatively, the seismic sensor may include three geophones and a hydrophone. Of course, other sensor combinations are possible. Seismic sensor 110 may be located completely or partially inside body 102.

A memory unit 112 may be connected to processor 108 and/or seismic sensor 110 for storing seismic data recorded by seismic sensor 110. A battery 114 may be used to power all these components. Battery 114 may be allowed to shift its position along a track 116 to change the AUV's center of gravity. This shift may be controlled by processor 108.

The AUV may also include an inertial navigation system (INS) 118 configured to guide the AUV to a desired location. An inertial navigation system includes at least a module containing accelerometers, gyroscopes or other motion-sensing devices. The INS is initially provided with the current position and velocity of the AUV from another source, for example, a human operator, a GPS satellite receiver, the underwater base, another INS from the vessel, etc., and thereafter, the INS computes its own updated position and velocity by integrating (and optionally filtrating) information received from its motion sensors. The advantage of an INS is that it requires no external references in order to determine its position, orientation or velocity once it has been initialized. Further, using an INS is inexpensive.

Besides or instead of the INS 118, the AUV may include a compass 120 and other sensors 122 as, for example, an altimeter for measuring its altitude, a pressure gauge, an interrogator module, etc. The AUV 100 may optionally include an obstacle avoidance system 124 and a communication device 126 (e.g., Wi-Fi or other wireless interface) or other data transfer device capable of wirelessly transferring seismic data. In one embodiment, the transfer of seismic data takes place while the AUV is on the vessel or the underwater base. Also, it is possible that the communication device 126 is a port that can be wire-connected to the vessel or the underwater base to transfer the seismic data. One or more of these elements may be linked to the processor 108. The AUV further includes an antenna 128 (which may be flush with the AUV's body) and a corresponding acoustic system 130 for communicating with its corresponding underwater base or a support vessel. Stabilizing fins and/or wings 132 for guiding the AUV to the desired position may be used with the propulsion system 103 for steering the AUV. However, in one embodiment, the AUV has no fins or wings. The AUV may include a buoyancy system 134 for controlling the AUV's depth.

The acoustic system 130 may be an Ultra-Short Baseline (USBL) system, also sometimes known as Super Short Base Line (SSBL), which uses a method of underwater acoustic positioning. A complete USBL system includes a transceiver mounted on a pole under a vessel or on the underwater base, and a transponder/responder on the AUV. Processor 108 may be used to calculate AUV's position from the ranges and bearings the transceiver measures. For example, the transceiver transmits an acoustic pulse that is detected by the subsea transponder, which replies with its own acoustic pulse. This return pulse is detected by the transceiver on the vessel or underwater base. The time from transmission of the initial acoustic pulse until the reply is detected is measured by the USBL system and converted into a range. To calculate a subsea position, the USBL calculates both a range and an angle from the transceiver to the subsea AUV. Angles are measured by the transceiver, which contains an array of transducers. The transceiver head normally contains three or more transducers separated by a baseline of, e.g., 10 cm or less.

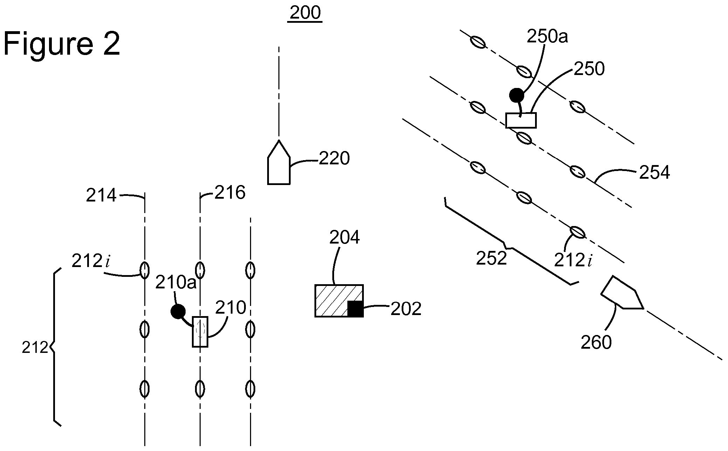

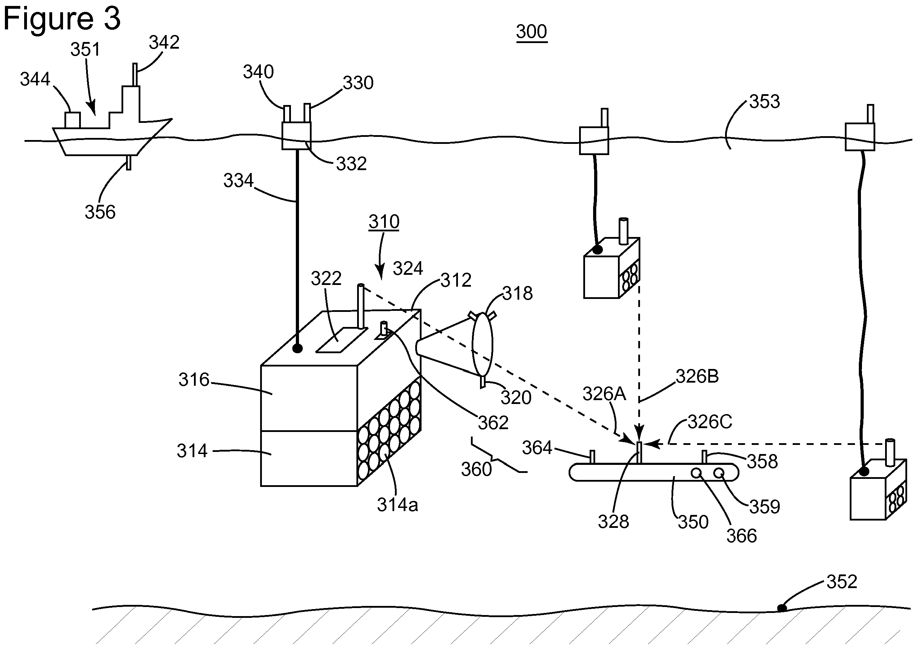

The AUV 100 illustrated in Figure 1 is exemplary. Other AUVs may be used with the novel method to be discussed next. As illustrated in Figure 2, a seismic survey system 200 may include a central control unit 202 located on, for example, the support vessel 204. The central control unit 202 may be in radio communication with one or more underwater bases 210 and 250 (through antennas located on corresponding buoys 210a and 250a) as discussed later. More than two underwater bases may be used. An underwater base 310, which is part of a seismic survey system 300, is illustrated in Figure 3, and has a body 312 that may be divided into two regions, a launching region 314 and a recovery region 316. Launching region 314 may include one or more tubes 314a that are configured to house an AUV 350. Recovery region 316 may include a recovery device 318 for guiding the AUVs inside the recovery region 316, after recording seismic data. Recovery region 316 may simply include a large chamber in which the AUVs enter and remain parked therein. Recovery device 318 may include a channel that has a first opening larger than a diameter of the AUV and a second opening approaching the AUVs diameter. The second opening directly communicates with the chamber. Various pingers 320 may be mounted on the recovery device 318 for guiding the AUVs.

Alternatively, each tube 314a of launching area 314 may have its own pingers to guide the AUVs back to their original location, i.e., inside the tubes. Underwater base 310 may also include a controller 322 that may have, as discussed later, a processor and storage device. Another pinger 324 may be attached to underwater base 310 for providing synchronized signals (e.g., every second) to the traveling AUVs for determining their positions. Thus, AUV 350, by receiving three pinging signals 326A-C from three different underwater bases (in one application it might be possible to receive only two pinger signals, if the bases and AUV are substantially at the same depth), may determine its geographical position relative to these three underwater bases. AUV 350 may use, for example, a sensor 328, e.g., hydrophone sensor, for detecting pinger signals 326A-C. Thus, the three different underwater bases form a long base line system, i.e., an underwater system that is equivalent to the Global Positioning System (GPS) with the difference that the pinger signals emitted by underwater bases work underwater while the GPS signals do not work underwater. In this way, each AUVs 350 may reach its target position 352 with a high degree of accuracy.

To be able to reach the target position 352, AUV 350 also needs to know the position of the underwater bases. For this reason, each underwater base has a GPS system, or a radio frequency (RF) transceiver or both for obtaining its geographical position. Figure 3 shows underwater base 310 having both the GPS 330 and the RF transceiver 340. However, an underwater base needs one of the two systems or an equivalent system for determining its position. If the underwater base has GPS 330, it can directly achieve its geographical position without additional help from support vessel 351. GPS 330 may be located on a buoy 332 that floats at the water surface 353. Thus, GPS 330 determines the geographical position of the buoy and the controller 322 determines the geographical location of underwater base 310 by taking into account, for example, a length of the cable 334 or by using results from an inertial navigation system (INS) that is capable of calculating the final destination and/or orientation of the underwater base. Cable 334 electrically connects buoy 332 to underwater base 310 so that data can be exchanged with controller 322. In this way, controller 322 receives the geographical location of the buoy and after it calculates the geographical location of underwater base, it transmits this info to AUV 350.

An underwater base may acoustically communicate with AUV 350 by using an acoustic based system 360 that includes at least a transmitter 362 located on the underwater base and a receiver 364 located on AUV 350. Alternatively, AUV 350 receives the geographical locations of the underwater bases before leaving its mother underwater base and uses this stored information for adjusting its trajectory toward target position 352.

However, if underwater base does not have a GPS system or does not use the GPS system, it may use RF transceiver 340 for communicating with a corresponding RF transceiver 342 located on support vessel 351 or a buoy. Thus, in this case, a global controller 344 located on vessel 351 or the buoy may acquire (as will be discussed next) the geographical location of each underwater base 310 and transmit this position through RF signals to RF transceiver 340 and consequently to underwater node 310. In one application, support vessel 351 (or buoy) may have an acoustic underwater positioning system (AUPS) 356 that is capable of determining a location of each underwater base 310, for example, USBL, SBL or interferometry positioning. Such a system 356 may exhibit high accuracy and long range performance in both positioning and telemetry modes. These features are obtained due to the automatic beam forming transducers which focuses the sensitivity towards its targets or transponders. This beam can not only be pointed in any direction below the vessel, but also horizontally and even upwards to the surface as the transducer has the shape of a sphere.

Thus, AUPS may be a hydro-acoustic Super Short Base Line (SSBL) or USBL, tow tracking system, able to operate in shallow and deepwater areas to proven ranges in excess of 3000 meters. It is a multi-purpose system used for a wide range of applications including towfish and towed platform tracking, high accuracy subsea positioning and telemetry and scientific research. The AUPS is used to determine the underwater nodes' positions.

After acquiring the underwater bases' positions, controller 344 instructs RF transceiver 342 to communicate this data to each underwater base so that the same information may be provided to the AUVs. By using this approach, a position of the underwater node is more accurately determined as the buoy's position does not always coincide (in the X and Y plane) with the underwater base's position.

In one application, the AUPS 356 of support vessel 351 may be used to determine the position of AUV 350, for example, for checking the AUVs positions. In this regard, AUV 350 may include a transponder 358 for communicating with AUPS 356.

After AUV 350 reaches its desired target position 352, its controller 359 instructs its seismic sensor 366 to start recording seismic signals. After a predetermined time, controller 359 may instruct seismic sensor 366 to stop recording. Alternatively, AUV 350 may receive a signal, either from support vessel 351 or from mother underwater base 310 to stop recording seismic data. The same signal may be used by controller 359 to instruct AUV 350 to either move to another position for recording again seismic data, or to dock with underwater base 310. If the latter is happening, AUV 350 moves toward recovery device 318, guided by pingers 320 and enters recovery region 316 or a tube 314a of the launching region 314 for transferring the seismic data to the underwater base 310. Other operations may be performed while back at the mother underwater base, as for example, battery recharge, various maintenance procedures, transfer of new target position, erasing data stored in the memory device, updating other underwater nodes' positions, etc.

Returning to Figure 2, note that each underwater base 210 and 250 has its own cluster (swarm, set, or array) 212 or 252 of AUVs. In an exemplary embodiment, a cluster of AUVs may include a few AUVs to tens of AUVs. Also note that AUVs are deployed in patterns that may be different from cluster to cluster. For example, cluster 212 has a row and column arrangement in which all AUVs 212i are deployed along lines 214 parallel to the traveling direction 216 of a shooting vessel 220, while in cluster 252, AUVs 252i are deployed along parallel lines 254 that form an angle different than zero with the traveling direction 216 of shooting vessel 220. Other AUV patterns may be imagined and implemented. Further, the number of AUVs in each cluster may differ.

One or more source vessels 220 and 260 may be used to generate the acoustic waves. The vessels may tow one or more source arrays. A source array may include one or more source elements. A source element may be impulsive (e.g., air gun) or vibratory (e.g., a vibratory piston). Any appropriate source element may be used. In one embodiment, each AUV cluster has its own source vessel. In another embodiment, the same source vessel may be shared by multiple clusters. However, in still another embodiment, plural source vessels may be assigned to a single cluster.

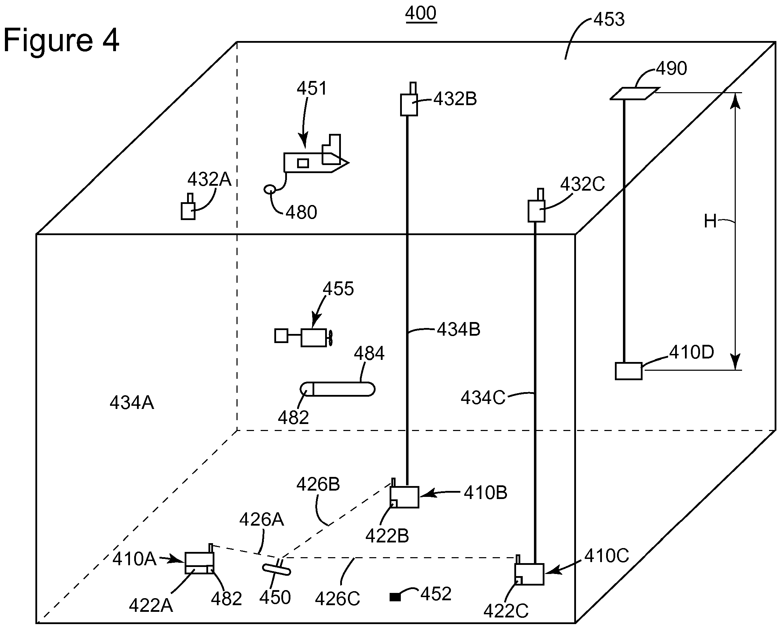

A seismic survey based on AUVs handled by underwater bases may be performed as now described with reference to Figure 4. Seismic survey system 400 may include a support vessel 451 that may, at the beginning of the survey, store the underwater nodes 410A-C on its deck. Support vessel 451 navigates to various predetermined positions at the ocean surface 453 that correspond to desired locations for the underwater nodes and deploys the underwater nodes. There are various ways for deploying the nodes, for example, lowering them with a crane, using a remote operated vehicle (ROV) 455 or simply releasing the nodes to free fall to their ocean bottom targets. In one application, one or more underwater bases may be floating in water, above the ocean floor.

Buoys 432A-C corresponding to underwater bases 410A-C float at the surface and carry GPS and/or RF transceiver as previously discussed. As also discussed above, the underwater bases may determine their geographical locations, either using the GPS system or by receiving this data from support vessel 451. One underwater base may communicate with another underwater base either directly, using the RF transceivers or through the support vessel for exchanging their geographical locations. Thus, prior to deploying the AUVs, each underwater base has not only its geographical location but also the geographical locations of neighboring underwater bases. This information (locations of at least three underwater bases) may be downloaded to each AUV prior to being launched.

After AUV 450 is launched toward its desired target position 452, it receives synchronized pinging signals 426A-C from at least three underwater bases so that a controller of the AUV can calculate/adjust its trajectory from the mother underwater base to the target position 452. In one application, a triangulation method is used by the AUV to determine its accurate location relative to the underwater bases. In one application, the AUV may also receive location information from the support vessel 451 if the vessel has an AUPS system.

Once the AUV has reached its target position, the AUV lands on the ocean floor to improve a contact with ocean bottom and starts recording seismic signals that are reflected from the subsurface. The support vessel or another vessel may tow a seismic source 480 that generates the seismic waves. Alternately, a seismic source 482 may be located on at least one underwater base 410A or on an AUV 484.

The underwater base, the support vessel or the controller of the AUV may be programmed to issue a signal for stopping the recording process and for instructing the AUV to return to the mother underwater base. AUV 450 is guided by the underwater base to return and enter inside the recovery device 318. Once inside the underwater base, the AUV may be prepared for a new mission, for example, its batteries are recharged, the recorded seismic data is transferred to the base and erased from the AUV, a new target position is transferred to the controller of the AUV, etc. Then, the process noted above is repeated until the seismic survey is finalized.

In one embodiment, one or more underwater bases 410D are directly attached to a vessel 490 at a depth H relative to the water surface 453 and this depth may be adjusted as necessary.

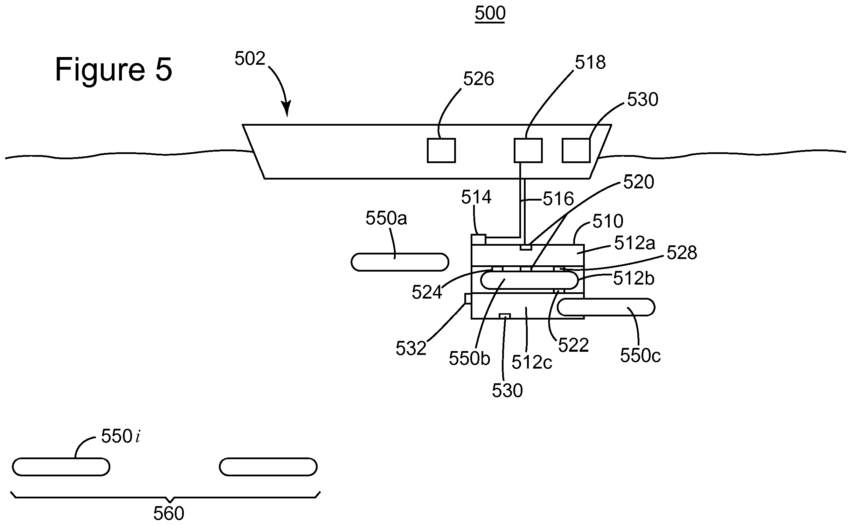

While the recorded seismic data may be transmitted from the AUVs to the corresponding underwater bases through acoustic means while the seismic survey is performed, according to an exemplary embodiment, the seismic data is transferred as discussed next, from the AUVs to the underwater bases. As illustrated in Figure 5, a seismic survey 500 includes, among others, a vessel 502 and plural AUVs 550i that form a cluster 560. The various devices or components located on the vessel (e.g., a section for receiving AUV for maintenance) are omitted for simplicity.

Vessel 502 is attached to a corresponding underwater base 510 attached underneath, as shown in the figure. Underwater base 510 may include plural bays 512a-c for receiving AUVs 550i. Figure 5 illustrates an AUV 550a approaching bay 512a, an AUV 550b being parked in bay 512b, and an AUV 550c leaving its bay 512c.

After AUV 550b is parked in bay 512b, a number of processes may be performed. For example, AUV 550b downloads its stored seismic data to a storage device 514 located on underwater base 510. The seismic data from storage device 514 may then be transferred through a cable 516 to a storage device 518 on vessel 502. From here, the seismic data may be transferred to a processing center or another desired location in different ways, for example, via a radio link, satellite communications, on a hard drive, on magnetic tapes, etc. The seismic data exchanged between AUV 550b and storage device 514 may take place through a wired or wireless interface 520. For the wireless case, it may be a Wi-Fi system, an acoustic system, etc. For the wired case, a movable connector (not shown) that is part of the interface 520 may be actuated to physically contact a corresponding connector located on the AUV's body. This connection may happen after the AUV is parked in the bay and secured with a locking mechanism 522 to prevent the AUV's unexpected movement inside the bay.

Simultaneously or concurrently, a power connector 524 located in each bay may be actuated to contact a corresponding power connector (not shown) on the AUV. Alternatively, the power connector 524 may be inductive, with no physical connection to the AUV necessary for transferring electrical power. The power connector 524 is connected to a generator 526 located on vessel 502 and capable of providing electrical power. After the AUV's battery is recharged, the power connector 524 is removed from the AUV. The generator 526 on the vessel may be a larger battery, a diesel generator, a solar panel, a hydro-generator or a combination of them. In one application, all the components located on the vessel and their functionalities may be moved on the underwater base.

The bays may also include a diagnostic tool 528 configured to communicate with the AUV and test various parameters associated with the AUV, e.g., the status of the battery, the status of the storage device, the quality of the seismic data, the status of the propulsion system, etc. Figure 5 shows the diagnostic tool 528 separated from the interface 520 and the power connector 524. However, in one exemplary embodiment, two or more of these three devices are integrated in a single tool so there is only one physical connection between the bay and the AUV. Further, in another exemplary embodiment, there is no physical connection between the bay and these tools because all these processes may be achieved wirelessly.

Optionally, the bays include a cleaning device 530 for removing deposits or other objects attached to the body of the AUVs. For parking the AUVs in corresponding bays on housing 510, a guiding system 532 may be provided at the entrance of each bay to guide the AUVs. Such a system is disclosed, for example, in Patent Application Serial No. 13/616,327, the entire content of which is incorporated herein by reference.

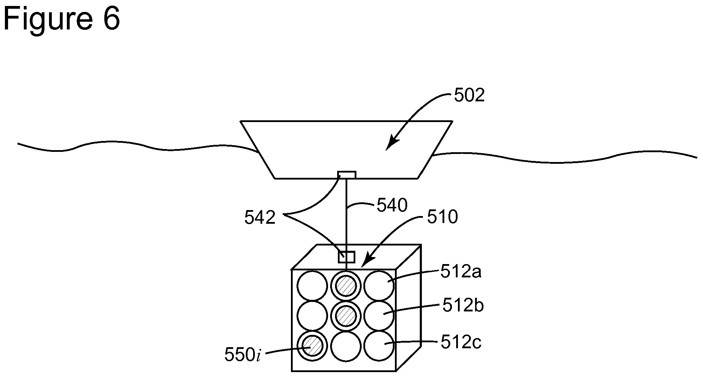

A side view of the housing 510 is shown in Figure 6, and a few AUVs 550i are also shown parked in corresponding bays. The strength link 540 between underwater base 510 and vessel 502 may be adjusted by using, for example, an actuator 542 located either on the underwater base or on the vessel. Actuator 542 may be a winch. The strength link 540 may also include power cables, data communication cables (e.g., optical cable), etc.

Buoys 332 or 432 and/or vessels 490 and 502 may include various components, as for example, a battery system and/or power generator (e.g., solar, wind, hydro, etc.), USBL system, etc.

Next, some details of implementing the novel cluster-based seismic survey system are discussed. With regard to the AUV's shape, one possibility is the shape of a submarine. This shape may have various cross-sections, such as circular. In one embodiment, the AUV's cross-section is close to a triangle. More specifically, the cross-section may be a triangle with round corners. This triangular-like shape may be advantageous when deploying or recovering the AUV in the underwater base connected to the vessel. For example, the bays of the underwater base may have a similar triangular shape and rolling elements configured to rotate such that the AUV is engaged when entering the bay and then guided until the locking mechanism locks the AUV. The rolling elements may be located inside each bay so there is enough contact with the AUV that it does not slip. Other shapes may be imagined that could be handled by a launching device.

According to an embodiment, not all the AUVs of the cluster managed by an underwater base may fit at the same time in the base 510. For example, if the cluster includes 60 AUVs, underwater base 510 may have only 9 slots. These numbers are exemplary and not intended to limit the novel concepts. The idea is to have a light and flexible system attached to the vessel or a buoy for managing maintenance activities associated with performing the seismic survey with the AUV cluster. However, for recovering all the AUVs, a larger vessel (not shown) may be used. This vessel would then have a system as described in Patent Application Serial No. 13/616,327 for storing all the AUVs, if necessary, on its deck. In this case, such a large vessel may service many clusters.

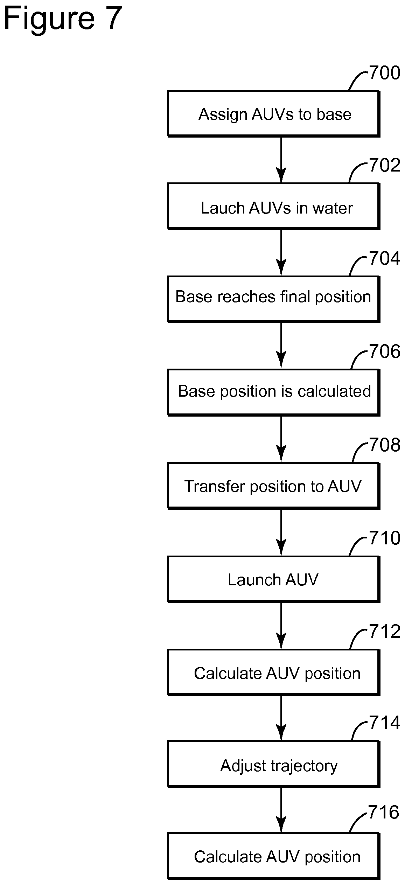

An embodiment for performing a seismic survey with underwater nodes and AUVs is now discussed with reference to Figure 7, which shows a step 700 in which plural AUVs are assigned to an underwater base. The AUVs assigned to an underwater base may be considered as forming a cluster, i.e., they will be returning to the mother underwater base after their part of the seismic survey is completely. Alternatively, the AUVs may start from a first underwater base, perform seismic recording, return to another underwater base, recharge their batteries, leave for another seismic recording and so on until the entire seismic survey is finalized. The AUVs assigned to the underwater base may be stored, initially, on a deployment vessel. In step 702, those AUVs are launched in water together with their underwater base. Once the underwater base reaches its final position in step 704, the controller of the base retrieves or calculates the geographical position of the base in step 706 and then this information is transferred to each AUV stored in the base in step 708.

In step 710, the AUV is launched from the base and it starts its journey toward the target position loaded into its memory. The AUV receives at least three pinger signals from three different underwater bases and calculates, in step 712, its location relative to the underwater bases and/or its absolute position. Based on the calculated position, the AUV's controller adjusts in step 714 the AUV's trajectory until the AUV reaches its target position in step 716. The step of calculating its position may happen as often as the AUV receives the pinger signals, e.g., every second. The step of adjusting the trajectory may be repeated as soon as its position is determined, depending on the desired accuracy for reaching the target position and also depending on the amount of electric power available at the AUV.

Once the target position has been reached, the AUV's controller initiates the receiver and starts to record seismic signals at a predetermined time. The controller may also control when to stop recording the seismic data. Note that during the seismic survey, at any step, one or more AUVs may leave the pattern and approach the underwater base for various reasons. For example, if the AUV's local control unit determines that its battery is discharged (e.g., below a given threshold), the AUV can decide to approach a bay in the underwater base for recharging. In one embodiment, the AUV makes this decision by itself. However, in another embodiment, the AUV first requires permission from the underwater base, the underwater base checks that a bay is available, and then informs the AUV which bay to approach. Alternatively, if no bay is available, the underwater base instructs the AUV to wait or to approach another underwater base. The AUV may need to approach a bay for other reasons, for example, a malfunction, a non-working seismic sensor, a full storage device, etc.

If no other seismic survey is envisioned next, the AUVs may be instructed to resurface (or move toward the surface) where a vessel may retrieve them. In one embodiment, if a seismic survey is to be performed soon, the AUVs may be "parked" in the underwater bases until they are needed again. Then, when the new seismic survey needs to be performed, the AUVs may be awakened by the corresponding underwater base.

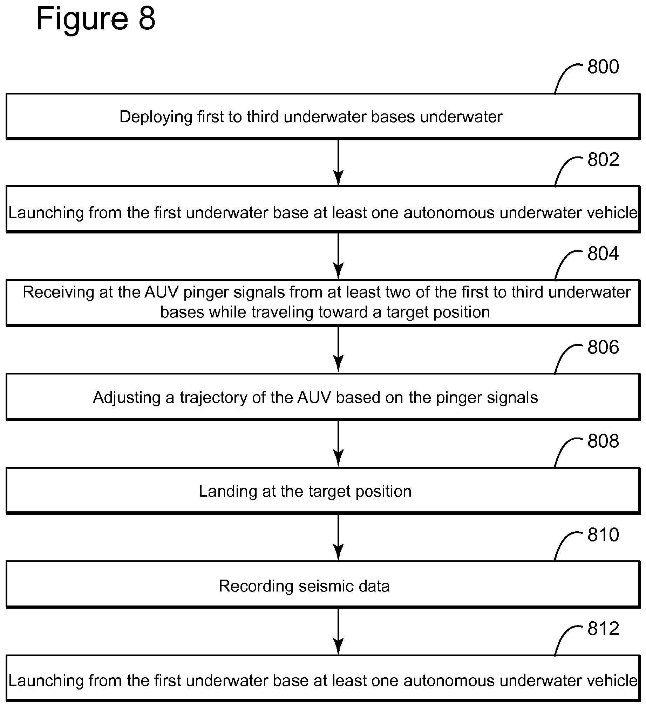

According to an exemplary embodiment illustrated in Figure 8, there is a method for recording seismic data during a marine seismic survey. The method includes a step 800 of deploying first to third underwater bases underwater, a step 802 of launching from the first underwater base at least one autonomous underwater vehicle, a step 804 of receiving at the AUV pinger signals from at least two of the first to third underwater bases while traveling toward a target position, a step 806 of adjusting a trajectory of the AUV based on the pinger signals, a step 808 of landing at the target position, a step 810 of recording seismic data, and a step 812 of returning to the first underwater base for transferring the seismic data.

## Claims

1. A seismic survey system for recording seismic signals during a marine seismic survey, the system comprising:
a plurality of autonomous underwater vehicles (AUVs; 100) having one or more seismic sensors (110);
and **characterised by** comprising a plurality of underwater bases (310), each being configured to house at least one AUV of the plurality of AUVs;
the underwater bases each being connected through a corresponding cable to a corresponding buoy (332) or to a vessel (351) that is floating at the water surface;
the underwater bases each having a controller that determines its geographical location and transmits the geographical location to at least one AUV of the plurality of AUVs; and
each of the plurality of AUVs being configured to receive a signal from at least two of the underwater bases when traveling under water so that its trajectory is adjusted in real-time, based on the geographical locations of the at least two of the underwater bases while moving toward a target position.

2. The system of claim 1, wherein
the plurality of underwater bases comprises first to second or first to third underwater bases, each housing at least one autonomous underwater vehicle (AUV);
the first to second or first to third underwater bases each being connected through the corresponding cable to the corresponding buoy that is floating at the water surface;
each controller of the first to second or first to third underwater bases determines its geographical location and transmits the geographical location to the at least one AUV; and
the at least one AUV being configured to receive a pinger signal from at least two of the first to second or first to third underwater bases when traveling under water so that its trajectory is adjusted in real-time, based on the geographical locations of the at least two of the first to second or first to third underwater bases while moving toward a target position.

3. The system of Claim 1 or 2, wherein the buoy comprises a global positioning system that determines a geographical position of the buoy and the controller determines the geographical location of its corresponding underwater base by taking into account results from an inertial navigation system.

4. The system of any of the preceding Claims, wherein the buoy comprises a radio-frequency transceiver for communicating with a support vessel.

5. The system of Claim 4, wherein the radio-frequency transceiver receives the geographical location of its corresponding underwater base from the support vessel or another buoy.

6. The system of any of the preceding Claims, wherein each of the first to third underwater bases has a recovery device for guiding and receiving the AUV.

7. The system of Claim 6, wherein the recovery device has pingers for guiding the AUV toward its corresponding underwater base.

8. The system of any of the preceding Claims, wherein the AUV triangulates the signals from at least three of the underwater bases, preferably from first to third underwater bases, to determine its geographical location.

9. The system of any of the preceding Claims, further comprising:
a seismic source located on the first underwater base and configured to generate seismic waves.

10. A method for recording seismic data during a marine seismic survey, the method **characterised by** comprising:
deploying a plurality of underwater bases (310), preferably first to third underwater bases, underwater and each being configured to house at least one autonomous underwater vehicle (AUV; 100) of a plurality of AUVs;
launching from the at least one of the underwater bases, preferably first underwater base, at least one AUV having one or more seismic sensors (110);
receiving at the AUV signals from at least two of the plurality of underwater bases, preferably first to third underwater bases, while traveling toward a target position;
adjusting a trajectory of the AUV based on the signals;
landing at the target position;
recording seismic data; and
returning to one of the plurality of underwater bases, preferably the first underwater base, for transferring the seismic data.

11. The method of Claim 10, further comprising:
calculating a current position of the AUV based on the pinger signals from the at least two of the plurality of underwater bases.

12. The system any of Claim 1 to 9, at least one AUV being configured to receive signals from at least two of the plurality of underwater bases while traveling under water so that its trajectory toward a target position is adjusted in real-time, based on (1) the geographical locations of the at least two of the plurality of underwater bases and (2) the signals.

13. The system of Claim 12, wherein each of the plurality of underwater bases has a corresponding cluster of AUVs.

14. The system of any of Claims 1 to 9 or 12 to 13, wherein each of the plurality of underwater bases comprises a plurality of bays each configured to house at least one AUV.

15. The system of any of Claims 1 to 9 or 12 to 14, wherein each of the plurality of underwater bases has a body comprising a launching region and a recovery region, the recovery region including a chamber in which the AUVs can enter and remain parked therein.

## Patentansprüche

1. Seismisches Erfassungssystem zum Aufzeichnen seismischer Signale während einer Meeresbebenerfassung, wobei das System umfasst:
eine Vielzahl von selbstständigen Unterwasserfahrzeugen (AUVs; 100) mit einem oder mehreren seismischen Sensoren (110);
und **gekennzeichnet durch** Umfassen einer Vielzahl von Unterwasserbasen (310), die jeweils dazu eingerichtet sind, mindestens ein AUV der Vielzahl von AUVs zu beherbergen;
wobei die Unterwasserbasen jeweils über ein entsprechendes Kabel mit einer entsprechenden Boje (332) oder mit einem an der Wasseroberfläche schwimmenden Schiff (351) verbunden sind;
wobei die Unterwasserbasen jeweils eine Steuervorrichtung aufweisen, die ihren geografischen Standort bestimmt und den geografischen Standort an mindestens ein AUV der Vielzahl von AUVs überträgt; und
wobei jedes der Vielzahl von AUVs dazu eingerichtet ist, ein Signal aus mindestens zwei der Unterwasserbasen zu empfangen, wenn es sich unter Wasser bewegt, sodass seine Bewegungsbahn in Echtzeit basierend auf den geografischen Positionen der mindestens zwei Unterwasserbasen angepasst wird, während es sich auf eine Zielposition zubewegt.

2. System gemäß Anspruch 1, wobei
die Vielzahl von Unterwasserbasen eine erste bis zweite oder erste bis dritte Unterwasserbasis umfasst, die jeweils mindestens ein selbstständiges Unterwasserfahrzeug (AUV) beherbergen;
wobei die erste bis zweite oder erste bis dritte Unterwasserbasis jeweils über das entsprechende Kabel mit der entsprechenden Boje verbunden sind, die an der Wasseroberfläche schwimmt;
jede Steuervorrichtung der ersten bis zweiten oder ersten bis dritten Unterwasserbasis ihren geografischen Standort bestimmt und den geografischen Standort an das mindestens eine AUV überträgt; und
das mindestens eine AUV dazu eingerichtet ist, ein Pinger-Signal aus mindestens zwei der ersten bis zweiten oder ersten bis dritten Unterwasserbasis zu empfangen, wenn es sich unter Wasser bewegt, sodass seine Bewegungsbahn in Echtzeit basierend auf den geografischen Positionen der mindestens zwei der ersten bis zweiten oder ersten bis dritten Unterwasserbasis angepasst wird, während es sich auf eine Zielposition zubewegt.

3. System gemäß Anspruch 1 oder 2, wobei die Boje ein globales Positionsbestimmungssystem umfasst, das eine geografische Position der Boje bestimmt, und die Steuervorrichtung die geografische Position ihrer entsprechenden Unterwasserbasis unter Berücksichtigung der Ergebnisse eines Trägheitsnavigationssystems bestimmt.

4. System gemäß einem der vorhergehenden Ansprüche, wobei die Boje einen Hochfrequenz-Sender-Empfänger zum Kommunizieren mit einem Unterstützungsschiff umfasst.

5. System gemäß Anspruch 4, wobei der Hochfrequenz-Sender-Empfänger die geografische Position seiner entsprechenden Unterwasserbasis aus dem Unterstützungsschiff oder einer anderen Boje empfängt.

6. System gemäß einem der vorhergehenden Ansprüche, wobei jede der ersten bis dritten Unterwasserbasis eine Bergungsvorrichtung zum Führen und Aufnehmen des AUV aufweist.

7. System gemäß Anspruch 6, wobei die Bergungsvorrichtung Pinger aufweist, um das AUV zu seiner entsprechenden Unterwasserbasis zu führen.

8. System gemäß einem der vorhergehenden Ansprüche, wobei das AUV die Signale aus mindestens drei der Unterwasserbasen, vorzugsweise aus der ersten bis dritten Unterwasserbasis, trianguliert, um seine geografische Position zu bestimmen.

9. System gemäß einem der vorhergehenden Ansprüche, ferner umfassend:
eine seismische Quelle, die sich auf der ersten Unterwasserbasis befindet und dazu eingerichtet ist, seismische Wellen zu erzeugen.

10. Verfahren zum Aufzeichnen von seismischen Daten während einer Meeresbebenerfassung, wobei das Verfahren **dadurch gekennzeichnet ist, dass** es umfasst:
Einsetzen einer Vielzahl von Unterwasserbasen (310), vorzugsweise einer ersten bis dritten Unterwasserbasis, die unter Wasser sind und jeweils dazu eingerichtet sind, mindestens ein selbstständiges Unterwasserfahrzeug (AUV; 100) einer Vielzahl von AUVs zu beherbergen;
Starten mindestens eines AUV mit einem oder mehreren seismischen Sensoren (110) aus mindestens einer der Unterwasserbasen, vorzugsweise der ersten Unterwasserbasis;
Empfangen von Signalen am AUV aus mindestens zwei der Vielzahl von Unterwasserbasen, vorzugsweise der ersten bis dritten Unterwasserbasis, während des Fahrens zu einer Zielposition;
Anpassen einer Bewegungsbahn des AUVs basierend auf den Signalen;
Landen an der Zielposition;
Aufzeichnen seismischer Daten; und
Rückkehren zu einer der Vielzahl von Unterwasserbasen, vorzugsweise der ersten Unterwasserbasis, zum Übertragen der seismischen Daten.

11. Verfahren gemäß Anspruch 10, ferner umfassend:
Berechnen einer aktuellen Position des AUV basierend auf den Pinger-Signalen aus den mindestens zwei der Vielzahl von Unterwasserbasen.

12. System gemäß einem der Ansprüche 1 bis 9, wobei mindestens ein AUV dazu eingerichtet ist, Signale aus mindestens zwei der Vielzahl von Unterwasserbasen zu empfangen, während es sich unter Wasser bewegt, sodass seine Bewegungsbahn in Richtung einer Zielposition in Echtzeit basierend auf (1) den geografischen Positionen der mindestens zwei der Vielzahl von Unterwasserbasen und (2) den Signalen angepasst wird.

13. System gemäß Anspruch 12, wobei jede der Vielzahl von Unterwasserbasen einen entsprechenden Cluster von AUVs aufweist.

14. System gemäß einem der Ansprüche 1 bis 9 oder 12 bis 13, wobei jede der Vielzahl von Unterwasserbasen eine Vielzahl von Abteilen umfasst, die jeweils dazu eingerichtet sind, mindestens ein AUV zu beherbergen.

15. System gemäß einem der Ansprüche 1 bis 9 oder 12 bis 14, wobei jede der Vielzahl von Unterwasserbasen einen Körper aufweist, der einen Startbereich und einen Bergungsbereich umfasst, wobei der Bergungsbereich eine Kammer enthält, in die die AUVs einfahren und darin geparkt bleiben können.

## Revendications

1. Système d'étude sismique pour enregistrer des signaux sismiques pendant une étude sismique en mer, le système comprenant :
une pluralité de véhicules sous-marins autonomes (AUV ; 100) ayant un ou plusieurs capteurs sismiques (110) ;
et le système étant **caractérisé en ce qu'**il comprend une pluralité de bases sous-marines (310) configurées chacune pour loger au moins un AUV de la pluralité d'AUV ;
les bases sous-marines étant connectées chacune par un câble correspondant à une bouée correspondante (332) ou à un navire (351) qui flotte à la surface de l'eau ;
les bases sous-marines ayant chacune un contrôleur qui détermine leur localisation géographique et qui transmet la localisation géographique à au moins un AUV de la pluralité d'AUV ; et
chaque AUV de la pluralité d'AUV étant configuré pour recevoir un signal en provenance d'au moins deux des bases sous-marines lorsqu'il se déplace sous l'eau, de sorte que sa trajectoire soit réglée en temps réel sur la base des localisations géographiques des au moins deux bases sous-marines pendant qu'il se déplace vers une position cible.

2. Système selon la revendication 1, dans lequel :
la pluralité de bases sous-marines comprend une première à une seconde ou une première à une troisième base sous-marine qui logent chacune au moins un véhicule sous-marin autonome (AUV) ;
la première à la seconde ou la première à la troisième base sous-marine sont connectées chacune par le câble correspondant à la bouée correspondante qui flotte à la surface de l'eau ;
chaque contrôleur de la première à la seconde ou de la première à la troisième base sous-marine détermine leur localisation géographique et transmet la localisation géographique à l'au moins un AUV ; et
l'au moins un AUV est configuré pour recevoir un signal d'émetteur acoustique en provenance d'au moins deux de la première à la seconde ou de la première à la troisième base sous-marine lorsqu'il se déplace sous l'eau, de sorte que sa trajectoire soit réglée en temps réel sur la base des localisations géographiques des au moins deux de la première à la seconde ou de la première à la troisième base sous-marine pendant qu'il se déplace vers une position cible.

3. Système selon la revendication 1 ou 2, dans lequel la bouée comprend un système de positionnement mondial qui détermine une position géographique de la bouée et le contrôleur détermine la localisation géographique de sa base sous-marine correspondante en prenant en compte des résultats d'un système de navigation par inertie.

4. Système selon l'une quelconque des revendications précédentes, dans lequel la bouée comprend un émetteur-récepteur radioélectrique pour communiquer avec un navire de soutien.

5. Système selon la revendication 4, dans lequel l'émetteur-récepteur radioélectrique reçoit la localisation géographique de sa base sous-marine correspondante en provenance du navire de soutien ou d'une autre bouée.

6. Système selon l'une quelconque des revendications précédentes, dans lequel la première à la troisième base sous-marine ont chacune un dispositif de récupération pour guider et recevoir l'AUV.

7. Système selon la revendication 6, dans lequel le dispositif de récupération a des émetteurs acoustiques pour guider l'AUV vers sa base sous-marine correspondante.

8. Système selon l'une quelconque des revendications précédentes, dans lequel l'AUV triangule les signaux en provenance d'au moins trois des bases sous-marines, de préférence en provenance de la première à la troisième base sous-marine, pour déterminer sa localisation géographique.

9. Système selon l'une quelconque des revendications précédentes, comprenant en outre :
une source sismique située sur la première base sous-marine et configurée pour générer des ondes sismiques.

10. Procédé d'enregistrement de données sismiques pendant une étude sismique en mer, le procédé étant **caractérisé en ce qu'**il comprend les étapes consistant à :
déployer une pluralité de bases sous-marines (310), de préférence une première à une troisième base sous-marine, sous l'eau et configurées chacune pour loger au moins un véhicule sous-marin autonome (AUV ; 100) d'une pluralité d'AUV ;
lancer, depuis l'au moins une des bases sous-marines, de préférence la première base sous-marine, au moins un AUV ayant un ou plusieurs capteurs sismiques (110) ;
recevoir, au niveau de l'AUV, des signaux en provenance d'au moins deux bases sous-marines de la pluralité de bases sous-marines, de préférence la première à la troisième base sous-marine, pendant qu'il se déplace vers une position cible ;
régler une trajectoire de l'AUV sur la base des signaux ;
se poser à la position cible ;
enregistrer des données sismiques ; et
retourner vers une base sous-marine de la pluralité de bases sous-marines, de préférence la première base sous-marine, pour transférer les données sismiques.

11. Procédé selon la revendication 10, comprenant en outre l'étape consistant à :
calculer une position actuelle de l'AUV sur la base des signaux d'émetteur acoustique en provenance des au moins deux bases sous-marines de la pluralité de bases sous-marines.

12. Système selon l'une quelconque des revendications 1 à 9, au moins un AUV étant configuré pour recevoir des signaux en provenance d'au moins deux bases sous-marines de la pluralité de bases sous-marines lorsqu'il se déplace sous l'eau, de sorte que sa trajectoire vers une position cible soit réglée en temps réel sur la base (1) des localisations géographiques des au moins deux bases sous-marines de la pluralité de bases sous-marines et (2) des signaux.

13. Système selon la revendication 12, dans lequel chaque base sous-marine de la pluralité de bases sous-marines a un groupe correspondant d'AUV.

14. Système selon l'une quelconque des revendications 1 à 9 ou 12 et 13, dans lequel chaque base sous-marine de la pluralité de bases sous-marines comprend une pluralité d'aires configurées chacune pour loger au moins un AUV.

15. Système selon l'une quelconque des revendications 1 à 9 ou 12 à 14, dans lequel chaque base sous-marine de la pluralité de bases sous-marines a un corps qui comprend une région de lancement et une région de récupération, la région de récupération incluant une chambre où les AUV peuvent entrer et y rester stationnés.
